# EUROPÄISCHE PATENTSCHRIFT

(11) **EP 2 063 148 B1**
(45) Veröffentlichungstag und Bekanntmachung des Hinweises auf die Patenterteilung: **30.04.2014**
(21) Anmeldenummer: 08105380.3
(22) Anmeldetag: 18.09.2008
(51) Int. Cl.: F16D 48/08

(54) **Verfahren zum Steuern einer Kupplung**
Method for controlling a coupling
Procédé destiné à la commande d'un embrayage

(30) Priorität: 26.11.2007 DE 102007057204
(43) Veröffentlichungstag der Anmeldung: 27.05.2009
(73) Patentinhaber: Getrag Ford Transmissions GmbH, 50735 Köln (DE)
(72) Erfinder: Schmitz, Harald, 44225 Dortmund (DE); Leibbrandt, Martin, 50181 Bedburg (DE)
(74) Vertreter: Müller-Gerbes Wagner Albiger Patentanwälte

(56) Entgegenhaltungen:
- EP-A2- 1 437 255
- DE-A1- 10 343 871
- DE-A1-102007 056 886
- FR-A1- 2 907 723
- GB-A- 2 414 776
- US-A1- 2007 244 617

## Beschreibung

Die Erfindung betrifft ein Verfahren zum Steuern einer Kupplung, insbesondere einer Reibkupplung, in einem mit einem Motor angetriebenen Fahrzeug. Insbesondere dient das Verfahren dazu, mit Hilfe der Modulierung des übertragbaren Kupplungsmomentes einen Anfahrvorgang des Fahrzeugs möglichst komfortabel und entsprechend dem Wunsch des Fahrers des Fahrzeugs zu steuern.

Gattungsgemäß offenbart GB-2414776 ein solches Verfahren.

Bei motorisch angetriebenen Fahrzeugen mit automatisierten Getrieben werden häufig Reibkupplungen als Anfahrelement eingesetzt. Diese Kupplungen haben im Vergleich zum Beispiel zu Drehmomentwandlern in konventionellen Automatikgetrieben den Vorteil, dass das übertragbare Kupplungsmoment im Rahmen der vom Motor vorgegebenen Grenzen nahezu beliebig moduliert werden kann.

Speziell das Anfahren eines motorisch angetriebenen Fahrzeugs (Kraftfahrzeug) stellt dabei besondere Ansprüche an die Regelung der Kupplung, um eine gute Kontrollierbarkeit des Anfahrvorgangs während des Rangieren einerseits und andererseits eine möglichst hohe Leistung im Fall einer Volllastanfahrt bereitstellen zu können. Die DE 197 168 28 A1 stellt hierfür viele verschiedene Steuer- und Regelverfahren vor, die sehr allgemein mögliche Steuerungen beschreiben. So wird z.B. auch offenbart, dass während des Anfahrvorgangs das übertragene Kupplungsmoment als Funktion der Motordrehzahl abgebildet werden kann.

In der DE 44 091 22 A1 wird vorgeschlagen, eine Abhängigkeit der Anfahrcharakteristik von einem Pedalwert bereit zu stellen, in dem die Startdrehzahl des Anfahrvorgangs in Abhängigkeit des Pedalwertes eingestellt wird. Ausgehend von dieser Startdrehzahl wird dann der Anfahrvorgang durchgeführt, in dem ein Soll-Schlupfverlauf eingeregelt wird. Es wird weiterhin offenbart, dass die Regelung ebenfalls abhängig von der Pedalstellung erfolgen kann. Allerdings ist eine Beschränkung der Pedaländerung auf 30% vorgesehen, da oberhalb dieses Wertes der Anfahrvorgang entweder neu angesetzt oder aber abgebrochen wird.

In der DE 102 306 11 A1 wird ein Verfahren offenbart, bei dem die Anfahrcharakteristiken je nach gewähltem Gang unterschiedlich ausfallen. Zudem lässt sich das von der Kupplung übertragbare Kupplungsmoment gemäß mehrerer Kupplungskennlinien einstellen, wobei eine Kupplungskennlinie für eine bestimmte Motorlast das übertragbare Kupplungsmoment in Abhängigkeit der Motordrehzahl vorgibt. Dabei wird eine Norm-Kupplungskennlinie vorgegeben, die dann mit einem Faktor multipliziert wird, der von einem Drosselklappenwinkel, also von der anliegenden Motorlast, abhängt. Der Faktor ist dabei eine lineare Funktion des Drosselklappenwinkels, die, abgesehen von konstanten Werten im Anfangsbereich und Endbereich, monoton fallend ist. Somit sinkt das Kupplungsmoment mit größer werdender Drosselklappenstellung.

Die DE 102 306 11 A1 schlägt vor, einen zeitabhängigen Faktor einzuführen, durch den die vorhandene Charakteristik, die durch die Norm-Kupplungskennlinie und den oben beschriebenen Faktor vorgegeben wird, beeinflusst wird. Ändert sich bei einem Anfahrvorgang die Drosselklappenstellung, so findet ein Wechsel zwischen den Kupplungskennlinien statt, die aufgrund des von dem Drosselklappenwinkel abhängigen Faktors unterschiedlich sind, wobei das Signal der Drosselklappenstellung einer starken Filterung mit langen Zeitkonstanten unterworfen wird.

Die Verfahren gemäß der drei oben angeführten Druckschriften sind jedoch nur eingeschränkt für eine gute Anfahrcharakteristik speziell mit modernen, aufgeladenen Dieselmotoren zu verwenden. Dieselmotoren haben häufig eine aggressive Charakteristik. Das heißt, dass ein starker Drehmomentanstieg schon bei kleinen Fahrpedaländerungen zu beobachten ist.

Zusätzlich wird gewünscht, dass ein Anfahren mit niedrigen Pedalwerten bei niedrigen Drehzahlen durchgeführt werden soll, da höhere Drehzahlen zu einer unerwünschten Geräuschentwicklung führen. Da jedoch auch Dieselmotoren ihr maximales Drehmoment bei höheren Drehzahlen (>1600 U/min) entwickeln, muss für eine Volllastanfahrt eine hohe Motordrehzahl eingeregelt werden.

Der Erfindung liegt daher die Aufgabe zugrunde, ein Verfahren zum Steuern einer Kupplung bereit zu stellen, das insbesondere bei mit aufgeladenen Dieselmotoren ausgestatteten Kraftfahrzeugen zu einer guten Anfahrcharakteristik führt.

Die der Erfindung zugrunde liegende Aufgabe wird mit dem Verfahren gemäß Anspruch 1 gelöst. Bevorzugte Ausführungsbeispiele können den Unteransprüchen entnommen werden.

Das Verfahren nach Anspruch 1 sieht vor, dass die Kupplungskennlinien in einen Rangierbereich und in einen Volllastbereich unterteilt sind, wobei innerhalb des Rangierbereichs bei konstanter Motordrehzahl das übertragene Kupplungsmoment mit der Motorlast ansteigt und wobei der Volllastbereich im Vergleich zum Rangierbereich bei gleicher Motordrehzahl kleinere übertragbare Kupplungsmomente aufweist. Bevorzugt kann die Motorlast aus anderen Parametern abgeleitet werden. Beispielsweise könnte dies eine Drosselklappenstellung oder eine Gaspedalstellung (im Folgenden kurz: Pedalwert) sein.

Somit wird während des Anfahrens das Kupplungsmoment in Abhängigkeit von der Motordrehzahl eingestellt. Dabei steigt das Kupplungsmoment vorzugsweise linear oder progressiv (überproportional) mit der Motordrehzahl an. Für verschiedene Motorlasten oder, soweit die Motorlast aus anderen Parametern abgeleitet wird, für verschiedene Gaspedalwerte sind dabei unterschiedliche Kupplungskennlinien implementiert, die in den besagten Rangierbereich und den besagten Volllastbereich unterteilt sind. Beim Rangierbereich führen größere Motorlasten oder Pedalwerte bei gleicher Motordrehzahl direkt zu größer werdenden Kupplungsmomenten. Beim Volllastbereich sind die Kupplungsmomente, die durch die Kupplung übertragen werden können, bei gleicher Motordrehzahl vorzugsweise deutlich niedriger als beim Rangierbereich.

Innerhalb des Rangierbereichs und/oder innerhalb des Volllastbereichs kann zwischen zwei benachbarten Kupplungskennlinien das übertragbare Kupplungsmoment interpoliert werden. Dies führt innerhalb eines Bereiches bei Änderung der Motorlast zu einer stetigen Änderung des Kupplungsmomentes ohne Sprünge. Beim Volllastbereich beispielsweise würde bei steigender Motorlast das übertragbare Kupplungsmoment ebenfalls steigen, soweit auch hier wie beim Rangierbereich mehrere Kupplungskennlinien hinterlegt sind.

Da im Rangierbereich mit steigendem Pedalwert (was unmittelbar mit dem vom Fahrer gewünschten Motormoment korreliert) auch das von der Kupplung übertragene Kupplungsmoment ansteigt, verhält sich das Fahrzeug der Fahrererwartung entsprechend: Wird der Pedalwert erhöht, so wird auch die Beschleunigung größer. Wird der Pedalwert erniedrigt, so nimmt auch die Beschleunigung ab. Bei einer einzelnen Kupplungskennlinie wäre der direkte Zusammenhang zwischen Pedalwert und Beschleunigung nicht gegeben. Hier müsste erst die Drehmasse des Motors beschleunigt werden, um dann über die gestiegene Motordrehzahl ein höheres Kupplungsmoment und damit eine höhere Beschleunigung des Fahrzeugs zu ermöglichen. Dadurch ist eine spontanere Reaktion des Fahrzeugs auf Pedalwertänderungen gegeben, was zu einer besseren Kontrollierbarkeit des Fahrzeugs führt.

Zusätzlich wird durch das steigende Kupplungsmoment der Motor höher belastet, wodurch die Motordrehzahl nicht so stark ansteigt, als wenn nur eine Kupplungskennlinie zur Verfügung stehen würde. Dadurch wird dem Wunsch nach niedrigen Anfahrdrehzahlen im Rangierbereich entsprochen. Um jedoch auch das maximale Motordrehmoment zur Verfügung zu stellen, ist es notwendig, den Motor mit höheren Drehzahlen zu betreiben. Um dies zu erreichen, weisen die Kupplungskennlinien des Volllastbereiches niedrigere Drehmomente als die Kupplungskennlinien des Rangierbereiches auf. Dies ist notwendig, um den Motor genügend Drehmomentenreserve für die Eigenbeschleunigung zur Verfügung zu stellen.

In einem bevorzugten Ausführungsbeispiel findet ein Wechsel von dem Rangierbereich in den Volllastbereich statt, wenn aufgrund steigender Motorlast ein erster Schwellenwert für die Motorlast überschritten wird, wobei während des Wechsels vom Rangierbereich in den Volllastbereich das Kupplungsmoment zumindest näherungsweise konstant gehalten wird. Dabei kann für das Kupplungsmoment beim Wechsel derjenige Wert eingestellt werden, der sich aus der im Rangierbereich befindlichen Kupplungskennlinie für die Motorlast ergibt, die dem ersten Schwellenwert entspricht. Dies ist das Kupplungsmoment unmittelbar vor dem Wechsel, so dass es keine sprunghafte Änderung des Kupplungsmomentes gibt.

Zudem kann ein Wechsel von dem Volllastbereich in den Rangierbereich stattfinden, wenn aufgrund sinkender Motorlast ein zweiter Schwellenwert für die Motorlast unterschritten wird, wobei während des Wechsels von dem Volllastbereich in den Rangierbereich das Kupplungsmoment zumindest näherungsweise konstant gehalten wird. Für das näherungsweise konstant zu haltende Kupplungsmoment kann dabei das Kupplungsmoment eingestellt werden, dass sich aus der im Volllastbereich befindlichen Kupplungskennlinie für die Motorlast ergibt, die dem zweiten Schwellenwert entspricht bzw. dem zweiten Schwellenwert am nächsten kommt. Auch hier werden sprunghafte Änderungen des Kupplungsmomentes vermieden.

Ein einfacher Wechsel zwischen den Bereichen durch einen motorlast- oder pedalabhängigen Umschalter würde zu einem unerwarteten Fahrzeugverhalten führen, da diese Umschaltung bei nahezu gleichbleibender Motordrehzahl passieren würde. Dadurch würde beim Wechsel von dem Rangierbereich in den Volllastbereich (also mit steigenden Pedalwerten) die Fahrzeugbeschleunigung des Rangierbereiches erst ansteigen, um dann plötzlich beim Wechsel in den Volllastbereich erheblich abzufallen. Umgekehrt würde bei einem Wechsel von dem Volllastbereich in den Rangierbereich bei sinkender Motorlast oder bei fallenden Pedalwerten die Fahrzeugbeschleunigung durch das dann ansteigende Kupplungsmoment sprunghaft auf einen großen Wert ansteigen, um dann im Rangierbereich wieder abzufallen.

Um dies zu vermeiden, wird bei dem oben beschriebenen bevorzugten Ausführungsbeispiel während des Wechsels das durch die Kupplung übertragbare Kupplungsmoment näherungsweise konstant gehalten, bis sich bei Änderung der Motordrehzahl, welche durch die Änderung der Motorlast bzw. des Pedalwertes indiziert wird, der neue Betriebspunkt auf der neuen Kupplungskennlinie eingestellt hat. Hierdurch kommt es bei einem kontinuierlichen Anstieg des Pedalwertes von 0 bis 100 % zuerst zu einer Zunahme der Beschleunigung, bis die Motorlast bzw. der Pedalwert den ersten Schwellenwert erreicht hat und der Wechsel eingeleitet wird. Der kontinuierlichen Zunahme des Kupplungsmomentes schließt sich eine Phase mit konstantem Kupplungsmoment und damit mit konstanter Fahrzeugbeschleunigung an, wobei in dieser Phase die Motordrehzahl ansteigt. Wird bei gleichbleibendem Kupplungsmoment und steigender Motordrehzahl der Volllastbereich erreicht, steigt entsprechend der im Volllastbereich hinterlegten Kupplungskennlinien mit steigender Motordrehzahl das Kupplungsmoment und somit die Beschleunigung. Umgekehrt wird bei einer Rücknahme des Pedalwertes von 100 % auf 0 % zuerst die Fahrzeugbeschleunigung mit der Motordrehzahl sinken, um dann während des Wechsels von dem Volllastbereich zum Rangierbereich konstant zu bleiben, wobei die Motordrehzahl weiter absinkt, um dann innerhalb des Rangierbereiches wieder zu sinken.

Das Kupplungsmoment kann im einfachsten Fall durch eine Minimal/Maximal-Auswahl während des Wechsels zwischen den beiden Bereichen gebildet werden, wobei beim Wechsel vom Rangierbereich zum Volllastbereich das Maximum der Kupplungsmomente genommen wird, während beim Wechsel vom Volllastbereich zum Rangierbereich das Minimum der Drehmomente verwendet wird.

Der erste Schwellenwert kann 80 % einer Motorvolllast, einer maximalen Pedalstellung oder einer maximalen Drosselklappenstellung entsprechen. Der zweite Schwellenwert kann einen Wert von 60 % der Motorvolllast bzw. eines entsprechenden Parameters annehmen. Die Differenz zwischen den Schwellenwerten kann auch andere Werte annehmen, beispielsweise auch 30 Prozentpunkte.

In einem bevorzugten Ausführungsbeispiel ist im Volllastbereich nur eine Kupplungskennlinie vorgesehen. Diese Kupplungskennlinie wird dann zugrunde gelegt, wenn, nach erfolgtem Wechsel aus dem Rangierbereich, die Motorlast beispielsweise größer als 80 % der Motorvolllast ist.

Das zumindest näherungsweise konstante Kupplungsmoment kann bei einem Wechsel zwischen dem Rangierbereich und dem Volllastbereich durch einen zeitabhängigen, einen drehzahlabhängigen und/oder durch einen schlupfabhängigen Faktor modifiziert werden. Dadurch wird der Übergang des Kupplungsmomentes gemäß einer Kupplungskennlinie auf das konstant zu haltende Kupplungsmoment beim Wechsel zwischen den Bereichen ausgerundet, um ein stetigeres Fahrgefühl zu erzielen. Durch diese Maßnahme wird jedoch die Phase des Wechsels verlängert.

Durch einen schlupfabhängiger Faktor kann zusätzlich ein sanftes "Einlaufen" der Motordrehzahl in eine Drehzahl der Eingangswelle eines hinter der Kupplung geschalteten Getriebes erzielt werden.

Das berechnete Kupplungsmoment kann während des gesamten Anfahrvorgangs durch einen weiteren, ebenfalls schlupfabhängigen Faktor modifiziert werden, der ein Absenken des Kupplungsmoments mit abnehmenden Schlupfwerten bewirkt. Dieser weitere schlupfabhängige Faktor kann als Kennfeld von der Motorlast ausgebildet sein. Er kann das Kupplungsmoment bis auf 50% des Kupplungskennlinienwertes absenken.

Erfindungsgemäß wird somit ein Verfahren vorgeschlagen, bei dem das übertragene Kupplungsmoment über mehrere diskrete Kupplungskennlinien bestimmt wird. Die Kupplungskennlinien sind dabei von der Motordrehzahl abhängig und werden durch die Motorlast, beispielsweise abgeleitet aus der Gaspedalstellung, die dem Fahrerwunsch entspricht, ausgewählt. Zwischen den Kupplungskennlinien eines Bereiches (Rangierbereich oder Volllastbereich) kann das Kupplungsmoment durch Interpolation zwischen den Kupplungskennlinien bestimmt werden. Beim Wechsel zwischen den beiden Bereichen wird das Kupplungsmoment im Wesentlichen konstant gehalten, wobei sich auch bei sich stark ändernden Motorlasten für den Fahrer keine unerwarteten Effekte ergeben.

### Anhand der Zeichnung soll die Erfindung näher erläutert werden. Es zeigen:

- Fig. 1: Kupplungskennlinien eines bevorzugten Ausführungsbeispiels;

- Fig. 2: Die Wechsel zwischen zwei Kupplungskennlinien unterschiedlicher Bereiche;
- Fig. 3: Einen Drehmomentpfad bei einer kurzzeitigen vollständigen Betätigung eines Gaspedals;
- Fig. 4: Modifizierte Übergangsfunktionen bei einem Wechsel zwischen Kupplungskennlinien unterschiedlicher Bereiche; und
- Fig. 5: Kennlinien eines Anfahrvorgangs bei Modifikation durch einen Momentenfaktor.

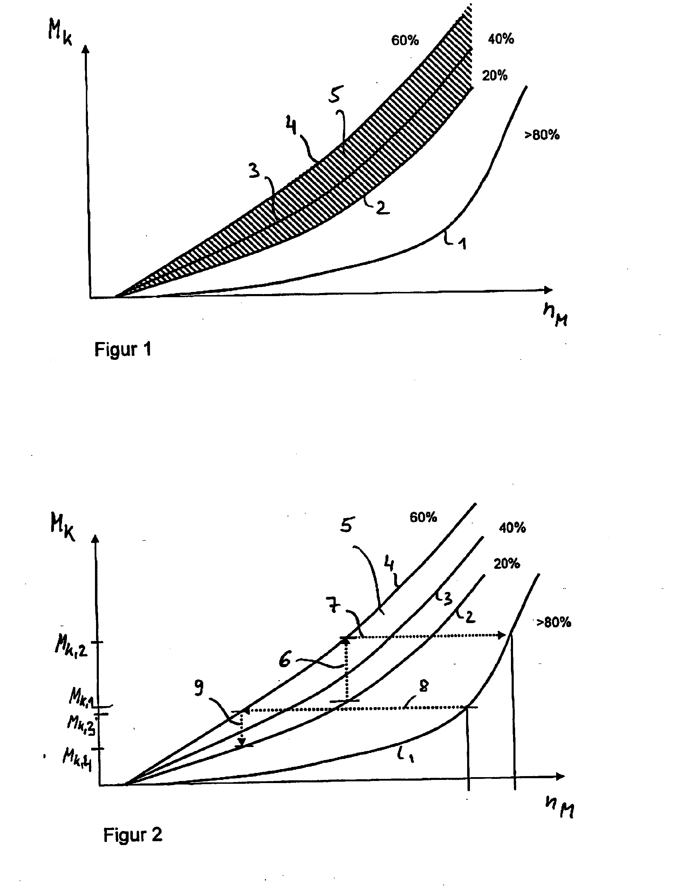

Figur 1 zeigt mehrere Kupplungskennlinien 1 bis 4, die den Zusammenhang zwischen einer Motordrehzahl n_{M} und einem Kupplungsmoment M_{K} für unterschiedliche Motorlasten wiedergeben. Beispielsweise gibt die Kupplungskennlinie 2 das Kupplungsmoment M_{K} vor, wenn durch einen Fahrer eines Kraftfahrzeugs, in dem das erfindungsgemäße Verfahren implementiert ist, über das Gaspedal eine Motorlast von 20 % der Motorvolllast eingestellt wird. Die Kupplungskennlinien 2,3,4 bilden einen Rangierbereich 5, der in der Figur 1 durch die schraffierte Fläche hinterlegt ist. Zu erkennen ist, dass innerhalb des Rangierbereiches 5 bei gleicher Motordrehzahl n_{M} das Kupplungsmoment M_{K} mit der Motorlast ansteigt.

Die Kupplungskennlinie 1 stellt einen Volllastbereich dar, die für alle Motorlasten das übertragene Kupplungsmoment M_{K} in Abhängigkeit der Motordrehzahl n_{M} vorgibt, soweit die Motorlast 80 % der Motorvolllast oder mehr beträgt. Deutlich wird, dass bei einer gleichen Motordrehzahl n_{M} durch die Kupplungskennlinie 1 deutlich weniger Kupplungsmoment M_{K} vorgegeben wird, als dies bei den Kupplungskennlinien 2,3,4 des Rangierbereiches 5 der Fall ist.

Figur 2 zeigt mit Hilfe von gestrichelten Pfeilen einen Wechsel zwischen den Kupplungskennlinien 1,2,3,4, wenn bei einem Anfahrvorgang die Motorlast von 20 % auf 80 % der Motorvolllast steigt. Zu Beginn des Anstiegs entspricht das Kupplungsmoment einen Anfangswert M_{K,1}. Bei Anstieg der Motorlast auf 80 % der Motorvolllast durchläuft das Kupplungsmoment zuerst den gesamten Rangierbereich 5, bis bei gleichbleibender Motordrehzahl, was durch den senkrechten Pfeil 6 deutlich wird, die Kupplungskennlinie 4 erreicht wird. Das in diesem Punkt übertragende Kupplungsmoment beträgt M_{K,2}. Der Wert M_{K,2} wird solange gestellt, bis durch das Ansteigen der Motorlast auf 80% ein Wechsel im Rangierbereich 5 zur Kupplungskennlinie des Volllastbereiches (Volllastkennlinie) eingeleitet wird. Bei diesem Wechsel oder Übergang wird das Kupplungsmoment konstant auf dem Wert M_{K,2} gehalten, wobei durch die steigende Motorlast der Motor beschleunigt wird, was sich in einem Anstieg der Motordrehzahl widerspiegelt. Das Kupplungsmoment wird dabei solange konstant gehalten (vgl. Pfeil 7), bis die Volllastkennlinie 1 erreicht wird. Danach steigt das Kupplungsmoment gemäß Kupplungskennlinie 1 mit steigenden Motordrehzahlen weiter an.

Durch die Pfeile 8 und 9 wird ein Wechsel von dem Volllastbereich zum Rangierbereich dargestellt. Sinkt die Motorlast unter einen zweiten Schwellenwert, der in dem Ausführungsbeispiel der Figur 2 60 % der Motorvolllast beträgt, so wird ein Wechsel vom Volllastbereich zum Rangierbereich 5 eingeleitet, in dem bei sinkenden Motordrehzahlen (vgl. Pfeil 8) ein Kupplungsmoment mit dem Wert M_{K,3} konstant gehalten wird. Das Kupplungsmoment bleibt solange konstant, bis die Kupplungskennlinie 4 erreicht wird. Danach erfolgt bei gleicher Motordrehzahl (Pfeil 9) innerhalb des Rangierbereiches eine Reduktion des Momentes auf den Wert M_{K,4}.

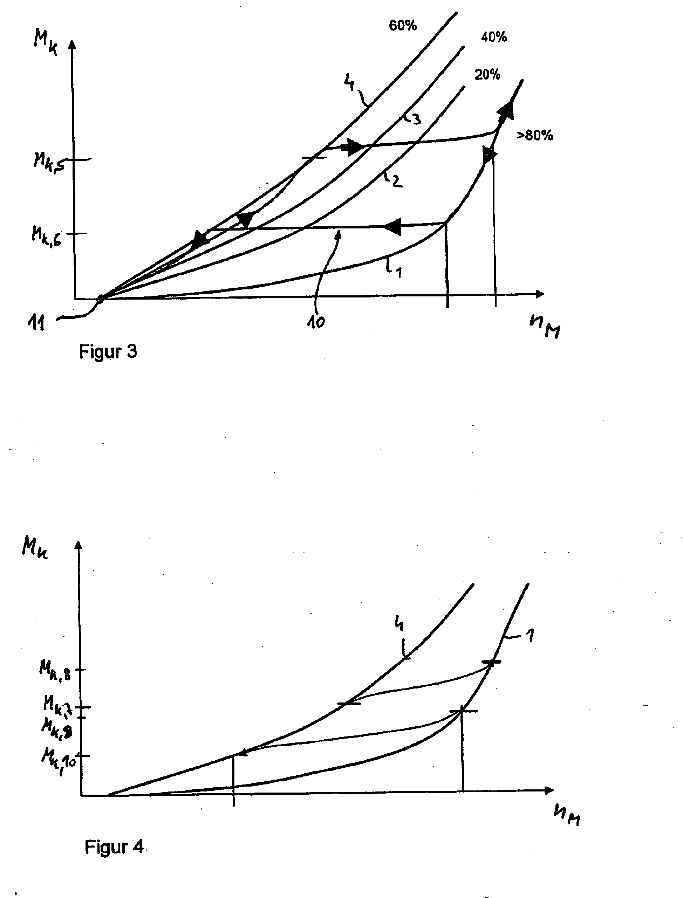

Figur 3 zeigt einen Verlauf 10 des Kupplungsmomentes M_{K} bei einer kurzzeitigen vollständigen Betätigung eines Gaspedals, was einem kurzzeitigen Anstieg der Motorlast auf 100 % entspricht. Ausgehend von einem Nullpunkt 11, von dem alle Kupplungskennlinien 2,3,4 des Rangierbereiches 5 starten, steigt das Kupplungsmoment auf den Wert M_{K,5}. Man erkennt, dass ausgehend vom Nullpunkt 11 durch den Anstieg der Motorlast auch die Motordrehzahl n_{M} angestiegen ist. Dieser Anstieg der Motordrehzahl ist damit zu erklären, dass der Anstieg der Motorlast eine gewisse Zeit in Anspruch nimmt, wodurch es zur Beschleunigung des Motors kommt (in Figur 2 wird dieser Effekt nicht betrachtet). Bei Erreichen der Motorlast von 60 % der Motorvolllast wird der Wechsel zum Volllastbereich eingeleitet, wobei der Wechsel durch ein konstantes Kupplungsmoment auf dem Niveau des Wertes M_{K,5} gekennzeichnet ist. Bei Erreichen der Volllastkennlinie 1 steigt das Kupplungsmoment gemäß der Volllastkennlinie 1, wobei der Motor und somit auch das Fahrzeug weiter beschleunigt. Da das Gaspedal nur kurz betätigt wird und somit nach Erreichen des Maximalwertes wieder abfällt, nimmt das übertragene Kupplungsmoment M_{K} und die Motordrehzahl n_{M} gemäß der Volllastkennlinie ab, bis der Wechsel zum Rangierbereich 5 eingeleitet wird, was durch konstante Kupplungsmomente auf dem Niveau des Wertes M_{K,6} gekennzeichnet ist. Nach Erreichen der Kupplungskennlinie 4 wird das Kupplungsmoment reduziert, bis wieder der Nullpunkt 11 erreicht wird.

Figur 4 zeigt eine Modifikation des Verfahrens, bei der das Kupplungsmoment bei einem Wechsel von einem Bereich zum anderen Bereich durch weitere Faktoren, die beispielsweise von der Zeit oder von der Drehzahl abhängen können, modifiziert wird, so dass das näherungsweise konstante Kupplungsmoment eine geringe Steigung aufweist. So steigt bei einem Wechsel von der Kupplungskennlinie 4 zur Kupplungskennlinie 1 das Drehmoment von einem Wert M_{K,7} auf einen Wert M_{K,8}, um ein stetigeres Fahrgefühl zu erreichen. Umgekehrt sinkt bei einem Wechsel von der Volllastkennlinie 1 auf die Kupplungskennlinie 4 das Kupplungsmoment von einem Wert M_{K,9} auf einen Wert M_{K,10}.

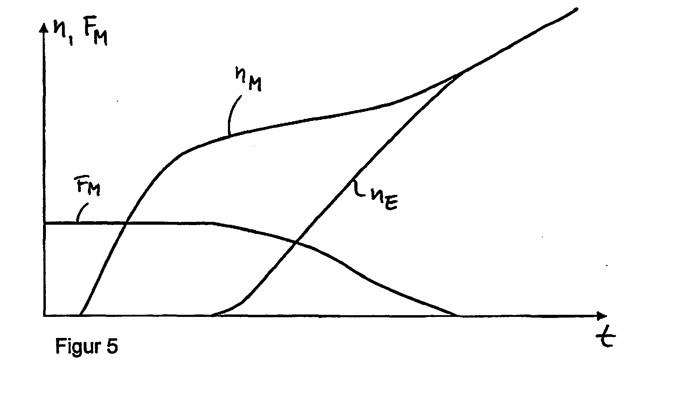

Ein Beispiel für einen schlupfabhängigen Faktor, durch den das Kupplungsmoment während des Anfahrens beeinflusst werden kann, zeigt Figur 5. Dort ist ein Momentenfaktor F_{M} über der Zeit t aufgetragen, der von der Drehzahldifferenz oder dem Schlupf zwischen der Motordrehzahl n_{M} und einer Drehzahl n_{E} einer Eingangswelle eines Getriebes abhängt. Mit kleiner werdendem Schlupf nimmt der Momentenfaktor F_{M} ab, so dass sanfte Angleichung der Motordrehzahl n_{M} an die Drehzahl n_{E} möglich ist.

### Bezugszeichenliste

- 1: Kupplungskennlinie
- 2: Kupplungskennlinie
- 3: Kupplungskennlinie
- 4: Kupplungskennlinie
- 5: Rangierbereich
- 6: Pfeil
- 7: Pfeil
- 8: Pfeil
- 9: Pfeil
- 10: Verlauf
- 11: Nullpunkt
- M_{K}: Kupplungsmoment (M_{K,1}, M_{K,2}, ....)
- n_{M}: Motordrehzahl
- n_{E}: Drehzahl einer Eingangswelle eines Getriebes
- F_{M}: Momententenfaktor

## Patentansprüche

1. Verfahren zum Steuern einer Kupplung in einem mit einem Motor ausgestatten Fahrzeug, wobei ein von der Kupplung übertragbares Kupplungsmoment (M_{K}) gemäß mehrerer Kupplungskennlinien (1,2,3,4) einstellbar ist, wobei jeweils eine Kupplungskennlinie für eine bestimmte Motorlast das übertra bare Kupplungsmoment (M_{K}) in Abhängigkeit der Motordrehzahl (n_{M}) vorgibt, wobei die Kupplungskennlinien (1,2,3,4) in einem Rangierbereich (5) und in einem Volllastbereich unterteilt sind, **dadurch gekennzeichnet, dass** innerhalb des Rangierbereichs (5) bei konstanter Motordrehzahl das übertragbare Kupplungsmoment (M_{K}) mit der Motorlast ansteigt und wobei der Volllastbereich im Vergleich zum Rangierbereich (5) bei gleicher Motordrehzahl kleinere übertragbare Kupplungsmomente (M_{K}) aufweist.

2. Verfahren nach Anspruch 1, **dadurch gekennzeichnet, dass** die Motorlast aus einer Drosselklappenstellung oder einer Gaspedalstellung abgeleitet wird.

3. Verfahren nach Anspruch 1 oder 2, wobei innerhalb des Rangierbereichs (5) und/oder dem Volllastbereich zwischen zwei benachbarten Kupplungskennlinien (1,2,3) das übertragbare Kupplungsmoment (M_{K}) interpoliert wird.

4. Verfahren nach einem der Ansprüche 1 bis 3, **dadurch gekennzeichnet, dass** ein Wechsel von dem Rangierbereich (5) in den Volllastbereich stattfindet, wenn aufgrund steigender Motorlast ein erster Schwellenwert für die Motorlast überschritten wird, wobei während des Wechsels vom Rangierbereich (5) in den Volllastbereich das Kupplungsmoment zumindest näherungsweise konstant gehalten wird.

5. Verfahren nach Anspruch 4, **dadurch gekennzeichnet, dass** bei dem Wechsel von dem Rangierbereich (5) in den Volllastbereich für das zumindest näherungsweise konstante Kupplungsmoment das Kupplungsmoment eingestellt wird, was sich aus der im Rangierbereich befindlichen Kupplungskennlinie (4) für die Motorlast ergibt, die dem ersten Schwellenwert entspricht.

6. Verfahren nach einem der Ansprüche 1 bis 5, **dadurch gekennzeichnet, dass** ein Wechsel von dem Volllastbereich in den Rangierbereich (5) stattfindet, wenn aufgrund sinkender Motorlast ein zweiter Schwellenwert für die Motorlast unterschritten wird, wobei während des Wechsels von dem Volllastbereich in den Rangierbereich (5) das Kupplungsmoment (M_{K}) zumindest näherungsweise konstant gehalten wird.

7. Verfahren nach Anspruch 6, **dadurch gekennzeichnet, dass** bei dem Wechsel von dem Volllastbereich in den Rangierbereich (5) für das näherungsweise konstant gehaltene Kupplungsmoment (M_{K}) das Kupplungsmoment eingestellt wird, das sich aus der im Volllastbereich befindlichen Kupplungskennlinie für die Motorlast ergibt, die dem zweiten Schwellenwert entspricht.

8. Verfahren nach einem der Ansprüche 5 bis 7, **dadurch gekennzeichnet, dass** der erste Schwellenwert 80 % einer Motorvolllast entspricht.

9. Verfahren nach einem der Ansprüche 6 bis 8, **dadurch gekennzeichnet, dass** der zweite Schwellenwert 60 % der Motorvolllast entspricht.

10. Verfahren nach einem der Ansprüche 1 bis 9, **dadurch gekennzeichnet, dass** im Volllastbereich nur eine Kupplungskennlinie (1) vorgesehen ist.

11. Verfahren nach einem der Ansprüche 1 bis 10, **dadurch gekennzeichnet, dass** das zumindest näherungsweise konstant gehaltene Kupplungsmoment bei einem Wechsel zwischen Rangierbereich (5) und Volllastbereich durch einen zeitabhängigen, einen drehzahlabhängigen und/oder durch einen schlupfabhängigen Faktor (F_{M}) modifiziert wird.

12. Verfahren nach einem der Ansprüche 1 bis 11, **dadurch gekennzeichnet, dass** das berechnete Kupplungsmoment während des gesamten Anfahrvorgangs durch einen schlupfabhängigen Faktor (F_{M*}) modifiziert wird, der ein Absenken des Kupplungsmomentes mit abnehmenden Schlupfwerten bewirkt.

13. Verfahren nach dem Anspruch 12, **dadurch gekennzeichnet, dass** der schlupfabhängige Faktor (F_{M*}) ebenfalls als Kennfeld von der Motorlast ausgebildet ist.

14. Verfahren nach einem der Ansprüche 12 bis 13, **dadurch gekennzeichnet, dass** das Kupplungsmoment durch den schlupfabhängigen Faktor bis auf 50% des Kupplungskennlinienwertes abgesenkt wird.

## Claims

1. Method for controlling a clutch in a vehicle which is equipped with an engine, wherein a clutch torque (M_{K}) which can be transmitted by the clutch can be adjusted according to a plurality of clutch characteristic curves (1, 2, 3, 4), wherein in each case a clutch characteristic curve predefines, for a specific engine load, the transmissible clutch torque (M_{K}) as a function of the engine rotational speed (n_{M}), wherein the clutch characteristic curves (1, 2, 3, 4) are divided into a manoeuvring region (5) and into a full load region, **characterized in that** within the manoeuvring region (5) the transmissible clutch torque (M_{K}) rises with the engine load at a constant engine rotational speed, and wherein the full load region has smaller transmissible clutch torques (M_{K}) compared to the manoeuvring region (5) at the same engine rotational speed.

2. Method according to Claim 1, **characterized in that** the engine load is derived from a throttle valve position or an accelerator pedal position.

3. Method according to Claim 1 or 2, wherein the transmissible clutch torque (M_{K}) is interpolated between two adjacent clutch characteristic curves (1, 2, 3), within the manoeuvring region (5) and/or the full load region.

4. Method according to one of Claims 1 to 3, **characterized in that** a changeover from the manoeuvring region (5) into the full load region takes place when a first threshold value for the engine load is exceeded owing to a rising engine load, wherein during the changeover from the manoeuvring region (5) into the full load region the clutch torque is kept at least approximately constant.

5. Method according to Claim 4, **characterized in that** in the case of changeover from the manoeuvring region (5) into the full load region the clutch torque is set for the at least approximately constant clutch torque, which results from the clutch characteristic curve (4) for the engine load which is located in the manoeuvring region and which corresponds to the first threshold value.

6. Method according to one of Claims 1 to 5, **characterized in that** a changeover from the full load region into the manoeuvring region (5) takes place if, owing to a falling engine load, a second threshold value for the engine load is undershot, wherein during the changeover from the full load region into the manoeuvring region (5) the clutch torque (M_{K}) is kept at least approximately constant.

7. Method according to Claim 6, **characterized in that** in the case of a changeover from the full load region into the manoeuvring region (5) the clutch torque is set for the clutch torque (M_{K}) which is kept approximately constant, which clutch torque results from the clutch characteristic curve for the engine load which is located in the full load region and which corresponds to the second threshold value.

8. Method according to one of Claims 5 to 7, **characterized in that** the first threshold value corresponds to 80% of a full engine load.

9. Method according to one of Claims 6 to 8, **characterized in that** the second threshold value corresponds to 60% of the full engine load.

10. Method according to one of Claims 1 to 9, **characterized in that** only one clutch characteristic curve (1) is provided in the full load region.

11. Method according to one of Claims 1 to 10, **characterized in that** the clutch torque which is kept at least approximately constant is modified in the case of a changeover between the manoeuvring region (5) and the full load region by means of a time-dependent, rotational-speed-dependent and/or slip-dependent factor (F_{M}).

12. Method according to one of Claims 1 to 11, **characterized in that** during the entire starting process the calculated clutch torque is modified by means of a slip-dependent factor (F_{M*}) which causes the clutch torque to fall as the slip values decrease.

13. Method according to Claim 12, **characterized in that** the slip-dependent factor (F_{M*}) is also embodied as a characteristic diagram of the engine load.

14. Method according to one of Claims 12 to 13, **characterized in that** the clutch torque is lowered by the slip-dependent factor as far as 50% of the clutch characteristic curve value.

## Revendications

1. Procédé de commande d'un embrayage dans un véhicule à moteur, dans lequel un couple d'embrayage (M_{K}) pouvant être transmis par l'embrayage peut être ajusté au moyen de plusieurs courbes caractéristiques d'embrayage (1, 2, 3, 4), une courbe caractéristique d'embrayage prédéfinissant respectivement, pour une charge du moteur déterminée, le couple d'embrayage transmissible (M_{K}) en fonction du régime du moteur (n_{M}), les courbes caractéristiques d'embrayage (1, 2, 3, 4) étant divisées en une plage de manoeuvre (5) et en une plage de pleine charge, **caractérisé en ce qu'**à l'intérieur de la plage de manoeuvre (5), pour un régime constant du moteur, le couple d'embrayage transmissible (M_{K}) augmente avec la charge du moteur, et la plage de pleine charge présente, par rapport à la plage de manoeuvre (5), pour un régime identique du moteur, de plus petits couples d'embrayage transmissibles (M_{K}).

2. Procédé selon la revendication 1, **caractérisé en ce que** la charge du moteur est dérivée d'une position d'un clapet d'étranglement ou d'une position de la pédale d'accélération.

3. Procédé selon la revendication 1 ou 2, dans lequel à l'intérieur de la plage de manoeuvre (5) et/ou de la plage de pleine charge, le couple d'embrayage transmissible (M_{K}) est interpolé entre deux courbes caractéristiques d'embrayage adjacentes (1, 2, 3).

4. Procédé selon l'une quelconque des revendications 1 à 3, **caractérisé en ce qu'**un passage de la plage de manoeuvre (5) à la plage de pleine charge a lieu lorsqu'une première valeur de seuil pour la charge du moteur est dépassée sous l'effet de l'augmentation de la charge du moteur, le couple d'embrayage étant maintenu au moins approximativement constant pendant le passage de la plage de manoeuvre (5) à la plage de pleine charge.

5. Procédé selon la revendication 4, **caractérisé en ce que** lors du passage de la plage de manoeuvre (5) à la plage de pleine charge pour le couple d'embrayage au moins approximativement constant, le couple d'embrayage est ajusté, ce qui s'obtient à partir de la courbe caractéristique d'embrayage (4) se trouvant dans la plage de manoeuvre pour la charge du moteur qui correspond à la première valeur de seuil.

6. Procédé selon l'une quelconque des revendications 1 à 5, **caractérisé en ce qu'**un passage de la plage de pleine charge à la plage de manoeuvre (5) a lieu lorsqu'une deuxième valeur de seuil de la charge du moteur est dépassée par le bas en raison d'une diminution de la charge du moteur, le couple d'embrayage (M_{K}) étant maintenu au moins approximativement constant pendant le passage de la plage de pleine charge à la plage de manoeuvre (5).

7. Procédé selon la revendication 6, **caractérisé en ce que** lors du passage de la plage de pleine charge à la plage de manoeuvre (5) pour le couple d'embrayage (M_{K}) maintenu approximativement constant, le couple d'embrayage est ajusté, lequel s'obtient à partir de la courbe caractéristique d'embrayage se trouvant dans la plage de pleine charge pour la charge du moteur qui correspond à la deuxième valeur de seuil.

8. Procédé selon l'une quelconque des revendications 5 à 7, **caractérisé en ce que** la première valeur de seuil correspond à 80 % d'une pleine charge du moteur.

9. Procédé selon l'une quelconque des revendications 6 à 8, **caractérisé en ce que** la deuxième valeur de seuil correspond à 60 % de la pleine charge du moteur.

10. Procédé selon l'une quelconque des revendications 1 à 9, **caractérisé en ce que** l'on ne prévoit qu'une seule courbe caractéristique d'embrayage (1) dans la plage de pleine charge.

11. Procédé selon l'une quelconque des revendications 1 à 10, **caractérisé en ce que** le couple d'embrayage maintenu au moins approximativement constant est modifié pendant un passage entre la plage de manoeuvre (5) et la plage de pleine charge par un facteur (F_{M}) dépendant du temps, dépendant du régime et/ou dépendant du glissement.

12. Procédé selon l'une quelconque des revendications 1 à 11, **caractérisé en ce que** le couple d'embrayage calculé pendant toute l'opération de démarrage est modifié par un facteur dépendant du glissement (F_{M*}) qui provoque un abaissement du couple d'embrayage avec la diminution des valeurs de glissement.

13. Procédé selon la revendication 12, **caractérisé en ce que** le facteur dépendant du glissement (F_{M*}) est également réalisé sous forme de champ caractéristique de la charge du moteur.

14. Procédé selon l'une quelconque des revendications 12 à 13, **caractérisé en ce que** le couple d'embrayage est diminué par le facteur dépendant du glissement jusqu'à 50 % de la valeur de la courbe caractéristique de l'embrayage.
